Europäisches Patentamt

European Patent Office

Office européen des brevets

(19)

(11) Publication number: **0 016 229**
**B1**

(12)

# EUROPEAN PATENT SPECIFICATION

(45) Date of publication of patent specification: **16.03.83**

(51) Int. Cl.³: **B 60 C 3/00, B 60 C 11/00**

(21) Application number: **79900594.7**

(22) Date of filing: **29.05.79**

(86) International application number:
**PCT/JP79/00135**

(87) International publication number:
**WO 80/00015 10.01.80 Gazette 80/1**

(54) **IRREGULAR-WEAR PROOF RADIAL-PLY TIRE.**

(30) Priority: **07.06.78 JP 69209/78**

(43) Date of publication of application:
**01.10.80 Bulletin 80/20**

(45) Publication of the grant of the patent:
**16.03.83 Bulletin 83/11**

(84) Designated Contracting States:
**FR**

(56) References cited:
**CH - A - 542 732**
**DE - A - 2 343 747**
**DE - A - 2 541 504**
**FR - A - 2 279 574**
**FR - B - 2 214 602**
**US - A - 1 348 200**
**US - A - 3 517 720**
**US - A - 4 044 810**

(73) Proprietor: **TOYO RUBBER INDUSTRY CO., LTD.**
**17-18, 1-chome, Edobori Nishi-ku**
**Osaka-shi, Osaka 550 (JP)**

(72) Inventor: **UEMURA, Yukihisa**
**5-8 Kudo 1-Chome, Ojicho**
**Kitakatsuragi-gun, Nara 636 (JP)**

(74) Representative: **Harlé, Robert et al,**
**c/o Cabinet Harlé & Phélip 21, rue de la**
**Rochefoucauld**
**F-75009 Paris (FR)**

Courier Press, Leamington Spa, England.

Irregular-wear proof radial-ply tire

This invention relates to improvement in wear resistance of radial ply tires and more particularly, to radial ply tires capable of increasing their wear life by reason of the improvement in irregular wear or excessive wear which is liable to occur in the shoulder portions thereof.

FR—A—22 79 574 describes a radial ply tire having irregular wear resistance in which the tread profile after vulcanization is formed to have a constant radius in the central zone and an increasing radius in the tread side zones.

In general, radial ply tires have many advantages over bias ply tires, for instance, good wear resistance, low rolling resistance, low heat build-up, good durability, good cornering property, etc.

They, however, have a drawback that the shoulder portions extending from both the terminals of the tread portion are apt to wear off and besides, irregular wear phenomenon is likely to occur, in which the shoulder portions do not uniformly and equally wear over the circumference.

It is well known in service use as well as in laboratory tests that the irregular wear or excessive wear occurs mostly when radial ply tires are used particularly as front wheels (steering wheels) of a car. Such irregular wear of the shoulder portions at early stage impairs essential performances inherent in the tires to a great extent.

For example, because of the fact that the shoulder portions wear off early nevertheless the rubber material is retained in the central portion of the tread, the wear life of the tire is shortened; the shoulder portions thus worn excessively become in contact with the ground, which is responsible for vibration and leads to a state causing slip.

It is accepted to be preferable that when the irregular wear occurs at the tires of front wheels in this way, the mounting sites are interchanged between the front wheel tires and rear wheel tires in which hardly any irregular wear occurs, in order to prolong the life of the tires.

This countermeasure is informed to the public to call their attention in the manual of standard maintenance and is widely prevailing. The tire exchange procedure like this is, however, troublesome and entails much labour and time, so that it is difficult to conform drivers to the manual. Thus, general tendency was toward advancing the irregular wear at front wheel tires.

In order to solve the disadvantageous problems, various attempts have hitherto been made, for example, shoulder portions are altered in belt construction; a tread is constructed so that the rubbers of the central portion and the lateral portions near the shoulders are different from each other in wear resistance.

To that end, however, it is necessary to alter greatly the processing machines in the current production line or to change the order of steps in the line, which leads to too large an increase in cost to meet a demand. The attempts have therefore not been put into practice.

In view of the current situation, this invention has an object of providing a novel radial ply tire in which a device for diminishing the irregular wear or excessive wear remained to be solved can be easily performed by mere slight modification to the current production line. Specifically stated, an investigation into fundamental causes for the irregular wear occurring in the shoulder portions was done, from which a correlation between the contoured shape of carcass plies and the profile of tread portion after inflation to an air pressure was found out. Thus, in this invention, a radial ply tire capable of greatly improving on irregular wear is provided by relating such tread profile of a tire as expected to assume after air pressure inflation with the configuration of the tread wall of a mould used in the vulcanization-moulding step.

This invention is predicated on the findings that in general radial ply tire, the tread portion is divided into a central zone where irregular wear is not likely to occur and lateral zones extending adjacent thereto where irregular wear is likely to occur by a borderline on a definite position; the borderline is determined by a definite relation equation in terms of section width and section height of the tire under inflated condition to a prescribed air pressure; and the magnitude of deformation of the lateral zone under inflation condition is in proportional to the section height of the tire.

According to this invention, we provide: a radial ply tire having irregular wear resistance which comprises a tread portion that consists of central zones extending on both sides of the mid-circumferential line of the tire and shoulder zones extending laterally adjacent to said central zones, said shoulder zones each being formed with a thickened rubber portion progressively increased in thickness toward the shoulder edge, characterized in that said central zones each are within a straight distance of $W_2$ expressed in the formula:

$$W_2 = W/2 - 0.365 \text{ H}$$

(wherein W and H are a section width and a section height outward of the rim flange, respectively of the tire when inflated to a prescribed air pressure) from said mid-circumferential line on both sides and only the central zones are defined with circumferential continuous grooves and that the section height (H) at the position of the section width (W) is not changed from upon moulding to upon inflating.

A process for manufacturing a radial ply tire having irregular wear resistance is provided comprising for vulcanizing and shaping said tire the use of a mould with an inner wall tread-shaping portion consisting of a curved surface of central zone-shaping portions each extending in the distance equal to said distance of $W_2$ from the center line of the said mould and a curved surface of shoulder zone-shaping portions each extending adjacent to said central zone-shaping portion at the boundary (B), said shoulder zone shaping portions being of such curved surface that the position (C) thereon located at a distance $W_1$ represented by the formula:

$$W_1 = W/2 - 0.2 \ H$$

(W and H being the same as in the definition of $W_2$) from the center line is spaced apart a distance of $d$ (A—C) represented by the range:

$$0.4 \times 10^{-2} . H \leqslant d \leqslant 1.5 \times 10^{-2} . H$$

(H being the same as above) radially outwards of the position (A) located at the distance of $W_1$ on the imaginary curved surface extrapolated and drawn from said central zone-shaping portions, said shoulder zone-shaping portions having a larger radius of curvature $(R_2)$ than that $(R_1)$ of said central zone-shaping portions.

Brief description of drawings

— Fig. 1 is a cross-sectional view of a conventional radial ply tire when inflated to a prescribed air pressure;
— Fig. 2 is an enlarged view of the essential part of fig. 1;
— Fig. 3 is a cross-sectional view of the inner wall configuration of a conventional vulcanization mould;
— Fig. 4 is a schematic view illustrating a wearing state of a conventional radial ply tire;
— Fig. 5 is a cross-sectional view of one example of radial ply tire according to this invention when inflated under an inner pressure;
— Fig. 6 is a cross-sectional view showing the inner wall profile of a vulcanization mould pertaining to the tire of this invention; and
— Fig. 7 is a graphical diagram showing relations of mileage and depth of wear with the present tire and conventional tire in comparison.

Best mode for carrying out the invention

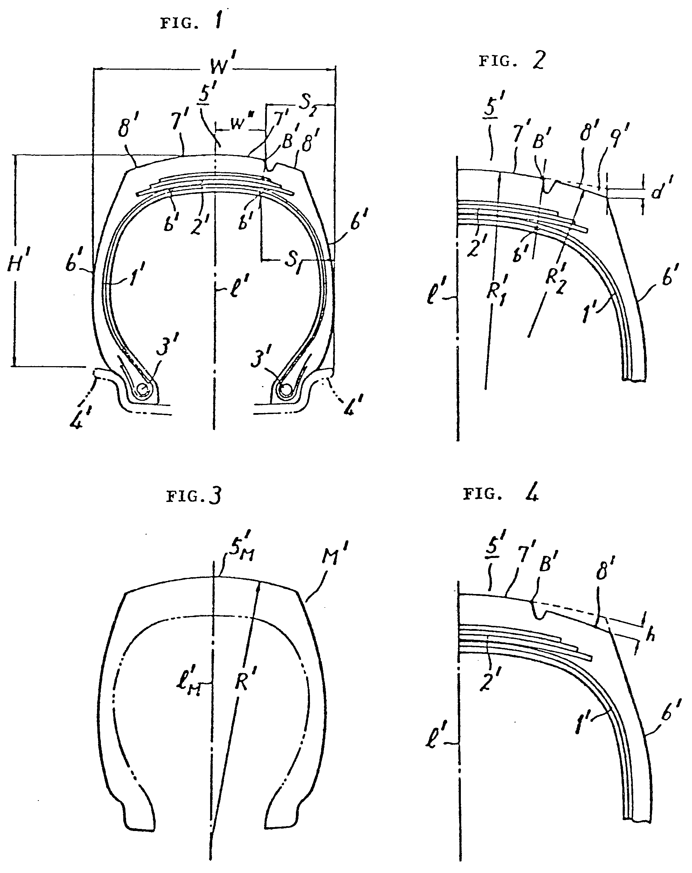

The course having led to this invention will be hereinafter described in detail with reference to the accompanying Figs. 1 to 4 to facilitate the understanding of this invention, in advance of referring to embodiments of this invention having the above-mentioned features.

Fig. 1 shows a conventional radial ply tire inflated to a prescribed air pressure in the cross- section of a plane containing the rolling axis of the tire, in which the reference numeral 1' designates radial carcass plies, 2' steel belts, 3' bead wires, 4' a rim flange portion, 5' a tread portion and 6' a sidewall portion. The tread portion consists of central zones 7', 7' extending on both sides of the mid-circumferential line (equatorial line) l' of the tire up to the points B', B' and shoulder zones 8', 8' extending on both sides of said zones 7' and contiguous to the sidewall portions 6', 6'.

The aforesaid points B', B' are points on the tread portion to which a normal is drawn from tangential points $b'$, $b'$ of the curved surface of crown ply cords having a greater radius of curvature and the curved surface of sidewall ply cords.

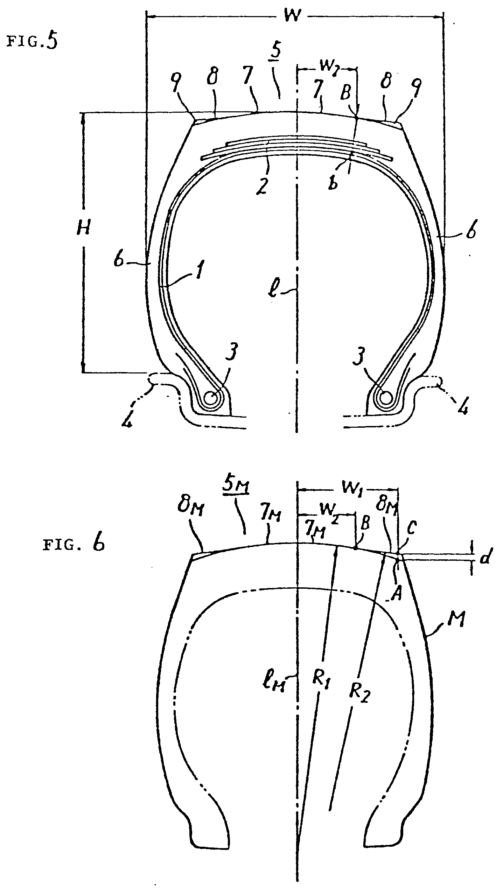

It was empirically proved that the irregular wear or excessive wear at the shoulder zones 8', 8' of conventional radial ply tire occurs to a great extent at the zones 8' each extending from the point B' towards the shoulder as shown by way of enlargement in Fig. 4.

In producing the radial ply tire having such usual construction, vulcanization and moulding are carried out by means of a vulcanization mould M' whose inner wall profile 5 M' for shaping the tread of the tire is formed with a single radius R' of curvature as illustrated in Fig. 3. The resulting tire, upon inflation to a prescribed air pressure, is formed so that the tread portion 5' comprises rubber layers of curved surfaces having two radii of curvature, with the central zone 7' having a larger radius of curvature $R_1'$ and with the shoulder zone 8' extending from near the point B' having a smaller radius $R_2'$ of curvature than $R_1'$, as shown in Fig. 2.

Furthermore, the shoulder zone 8' assumes a state that its area of contact with the ground subsides inward by a distance of $d'$ vis-a-vis the imaginary curved surface extrapolated and drawn from the area of the central zone 7' in contact with the ground.

Thus, it would be evident from the investigation into such tread profile that when the tire having the tread profile is in contact with the flat road surface and is deformed to a flat area in the tread portion, the shoulder zone 8' extending from the point B' is also deformed and slips against the road surface to a greater extent as compared with the central zone 7'.

In addition to this, the shoulder zone 8' is lowered more greatly in respect of the pressure of contact exerted on the ground as compared with the central zone 7', so that the friction force between the tread portion 5' and the road surface is also decreased leading to a state that the shoulder zone is more liable to slip than the central zone 7'.

When such profiled tires are mounted on front wheels and are steered, a sideslip angle is created at the tires, so that the tires run while sideslipping. In consequence, the shoulder zone 8' that deforms greatly and is ready to slip upon being in contact with the ground is accelerated to wear off and wears earlier by the amount of $h$ as compared with the central zone 7' as shown in Fig. 4, which results in the occurrence of irregular or excessive wear phenomenon.

From this standpoint, extensive experiments and measurements were performed in order to search into the cause for irregular wear or excessive wear at the shoulder zone 8' and the following facts were found:

In the radial ply tire as shown in Fig. 1, assuming that under inflation condition of a prescribed air pressure the section height of the tire protruding outward of the rim flange 4' is H' and the section width of the tire is W', an investigation into many tires diverse in size and flatness ratio was carried out with respect to variation of the point $b'$ vs. the height H' and as a result, the distance $S_1$ from the position of the maximum width W' in the width direction to the point $b'$ turned out to be generally in the range of 0.290 to 0.385 times the height H'.

It was further found that the local deformation as shown in Fig. 2 occurs in the shoulder zone 8' which extends outward of the point B' with which a normal from the point $b'$ toward the area of contact between the tread portion 5' and the ground intersects.

The distance $S_2$ from the point B' to the position of the maximum width in parallel with the mid-circumferential line I' of the tire proved to be in the range of from 0.25 to 0.45 times, mostly in the range of from 0.276 to 0.365 times the height H'. In other words, the distance W'' in the width direction from the mid-circumferential line I' to the point B' is represented by the range:

$$W'/2-0.276\ H' \geqq W'' \geqq W'/2-0.365\ H'$$

On the other hand, with the tire produced by means of a mould M' as shown in Fig. 3 which is formed having a single radius R' of curvature on the tread-shaping portion 5M', local deformation in the shoulder zone 8' as shown in Fig. 2 was investigated. Consequently, it was proved that magnitude of deformation (expressed in terms of thickness), $d'$ is in the range of about 0.004 H' to 0.015 H'.

The radial ply tire of this invention thus has been accomplished based on the findings described above on irregular wear phenomenon. One example of the radial ply tire is illustrated in Fig. 5, wherein the tread portion 5 consists of central zones, 7, 7 which extend on both sides of the mid-circumferential line I of the tire each from there to the point B that it is a point drawn from the tangential point $b$ of the curved surfaces of crown ply cords and sidewall ply cords to the tread and shoulder zones 8, 8 which each extend laterally adjacent to said central zone at the point B.

Said central zone 7 extends within a straight distance of $W_2$ from the mid-circumferential line I of the tire, which distance is obtained by subtracting 36.5% the section height H from 1/2 the section width W of the tire when inflated to a prescribed air pressure, namely

$$W_2=W/2-0.365\ H.$$

Said shoulder zone 8 is formed with a thickened rubber portion 9 increased progressively in thickness toward the shoulder (hereinafter simply referred to as "thickened rubber portion") so as not to assume, under inflation condition of a prescribed air pressure, a curved surface radially inward of the hypothetical curved surface elongated and drawn from the curved surface of the central zone, stated another way, so as to assume a curved surface having a single radius of curvature over from the central zone to the shoulder zone.

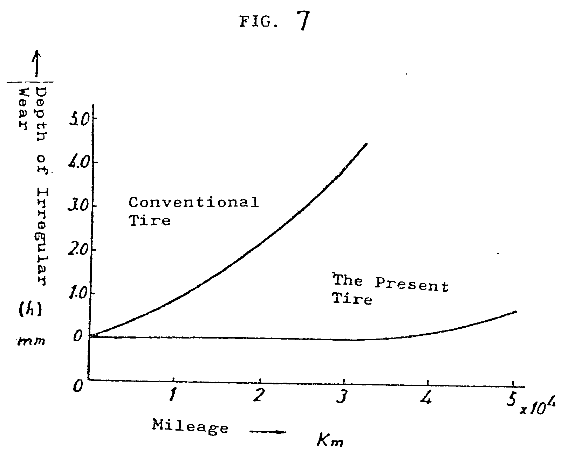

The mould M for producing that tire is constructed as shown in Fig. 6. In the mould M, the tread-shaping inner wall 5M consists of two curved surfaces, namely central zone-shaping portions 7M, 7M having a radius $R_1$ of curvature which extend each within said distance of $W_2$ from the center line IM of the mould and shoulder zone-shaping portions 8M, 8M having a radius $R_2$ of curvature which extend each adjacent to said central zone-shaping portion at the boundary B.

Here, the radius of curvature, $R_2$ of said shoulder zone-shaping portion 8M is constructed larger than the radius of curvature, $R_1$ of said central zone-shaping portion 8M is such that the position of C on it located at a straight distance of $W_1$:

$$W_1=W/2-0.2\ H$$

(wherein W and H are a section width and a section height of the tire when inflated to a prescribed air pressure) from the center line IM of the mould is spaced apart a distance of $d$ expressed by the equation:

$$0.4\times10^{-2}\ H \leqq d \leqq 1.5\times10^{-2}\ H$$

(H is the same as above) radially outward of the imaginary position A which is located on the hypothetical curved surface elongated and drawn (having the radius of curvature, $R_1$) from the curved surface of said central zone-shaping portion 7M likewise at a distance of $W_1$ from the center line IM of the mould. This distance $d$ corresponds to the magnitude $d'$ of local deformation at the shoulder zone 8' of conventional tire.

The vulcanization and moulding of a tire by the use of the mould M thus far described enables the formation of the thickened rubber portion 9 as shown in Fig. 5 on the area of contact with the ground at the shoulder zone 8.

The thickened rubber portion 9 can compensate the locally deformed portion 9' as shown in Fig. 2 and accordingly, can prevent the shoulder portion from locally deforming unlike the conventional tire.

The curved surface of the entire tread 5 of the tire thus obtained approaches a single radius of curvature under the inflation condition of a prescribed air pressure.

As the mould for producing the present tire having the tread profile thus described above, a usual mould may be readily used in the state modified merely by performing a simple processing such as by scraping the amount corresponding to the thickened rubber portion 9 off from the mould at the shoulder zone-shaping portions 8M, 8M by grinding means. By reason of the resulting tread profile of the tire, it is thus feasible to prevent the irregular wear or excessive wear as described above at the shoulder zone.

For the purpose of service tests, a radial ply tire of a type of 10.00 R 20-14 PR according to this invention which is constructed to be $W_1=W/2-0.2$ H, $W_2=W/2-0.365$ H and $d=1.1 \times 10^{-2}$ H and a conventional radial ply tire of the same type were built up, mounted on the front wheels, and inflated to a prescribed air pressure (7.25 kg/cm²) as stipulated in Japanese Industrial Standard D 4202. Comparative service tests were conducted in that state for a long duration under the same running condition. The results are shown in Fig. 7, wherein the conventional tire causes local wear of the order of 4 mm at a mileage of thirty to fourty thousand Km whereas the present tire causes little local wear. Thus, the amelioration in wear resistance of this invention has been confirmed in practice.

In general radial ply tires as described above, when the tread portion 5' becomes in contact with the flat road surface and is deformed to a flat area, magnitudes of the deformation and the slip against the road surface are larger at the shoulder zone 8' than at the central zone 7'. Consequently, local irregular wear occurs particularly at the shoulder zone 8' which extends outwards of the point on the area of contact with the ground with which a normal from the tangential point of curved surface of crown ply cords and curved surface of sidewall ply cords to the contact area intersects.

An exemplary general radial ply tire of a size of 10.00 R 20-14 PR was measured with the aid of a sideslip tester in respect of sideslip characteristics when used as front wheels (steering wheels) (under the same air pressure as above). In consequence, it was turned out to run with sideslipping because front wheel alignment, particularly toe-in is set. The trend is seen toward that the magnitude (mm) of sideslip becomes larger with the increase in toe-in magnitude (mm). The foregoing size is directed to a large-size tire suitable for use in truck or bus, but the above fact holds true also in a tire size for car.

Thus, the shoulder zone 8' is liable to cause irregular wear because of the decrease in friction force between the road surface and the contact area due to decrease in the pressure of contact with the ground which is caused by large magnitudes of the deformation and slip upon contacting with the ground.

In the situation where the tire runs while causing sideslipping in that state of being liable to cause irregular wear and is of a rib type, it is placed in a condition of being susceptible to lateral deformation because of the low rigidity of the rib in the shoulder zone, i.e. the narrow rib width, so that wear occurs much in the shoulder zone, thus resulting in the occurrence of irregular wear.

From the analysis above, it follows that in order to achieve the intended object of this invention more efficiently, it is preferred not to provide the radial ply tire with such grooves that significantly affect the occurrence of irregular wear, more particularly continuous circumferential grooves in the portion liable to cause irregular wear, namely the shoulder zone 8.

Accordingly, continuous circumferential grooves are provided in the central zones 7, 7 but not in the shoulder zones 8, 8, whereby the width of the shoulder rib can be significantly widened and the occurrence of irregular wear can be inhibited to the least possible extent.

Otherwise, the tire may be constructed so that the central zone 7 is provided with continuous circumferential grooves and the shoulder zone 8 is provided with discontinuous grooves or sipes.

As thus far described, the radial ply tire according to this invention is, on the one hand, characterized in that the shoulder zone is formed with the thickened rubber portion, on the basis of the findings that said zone liable to cause irregular wear is determined by the section height and section width of the tire when inflated to a prescribed air pressure and that the magnitude of deformation in the zone is in proportional to the section height of the tire under the same condition.

The radial ply tire is, on the other hand, characterized in that the mould used for the production of it has a configuration that the tread-shaping inner wall consists of two curved surfaces of the shoulder zone-shaping portion and the central zone-shaping portion, the former having a larger radius of curvature than the latter, the former being such that a definite position on it is spaced apart a specified distance (capable of compensating the deformation magnitude upon inflation under a prescribed pressure) radially outward of the imaginary curved surface drawn elongated from the latter.

Therefore, wear strength in the shoulder zone can be enhanced, so that the occurrence of irregular wear, such as excessive wear or partial wear can be prevented and the length of wear life can be increased.

Moreover, the present invention enables the production of tire by the use of currently used vulcanization mould which is slightly modified on the production line in status quo and at an economical cost, and therefore, is of great worth in practicability.

## Claims

1. A radial ply tire having irregular wear resistance which comprises a tread portion (5) that consists of central zone (7) (7) extending on both sides of the mid-circumferential line (1) of the tire and shoulder zones (8) (8) extending laterally adjacent to said central zones, said shoulder zones each being formed with a thickened rubber portion (9) progressively increased in thickness toward the shoulder edge, characterized in that said central zones (7) (7) each are within a straight distance of $W_2$ expressed in the formula:

$$W_2 = W/2 - 0.365\ H$$

(wherein W and H are a section width and a section height outward of the rim flange, respectively of the tire when inflated to a prescribed air pressure) from said mid-circumferential line (1) on both sides and only the central zones (7) (7) are defined with circumferential continuous grooves and that the section height (H) at the position of the section width (W) is not changed from upon moulding to upon inflating.

2. A process for manufacturing a radial ply tire having irregular wear resistance as claimed in claim 1, comprising for vulcanizing and shaping said tire the use of a mould with an inner wall tread-shaping portion consisting of a curved surface of central zone-shaping portions (7 M) each extending in the distance equal to said distance of $W_2$ from the center line (1M) of the said mould and a curved surface of shoulder zone-shaping portions (8M) each extending adjacent to said central zone-shaping portion (7M) at the boundary (B), said shoulder zone-shaping portions being of such curved surface that the position (C) thereon located at a distance of $W_1$ represented by the formula:

$$W_1 = W/2 - 0.2\ H$$

(W and H being the same as in the definition of $W_2$) from the center line (1M) is spaced apart a distance of $d$ (A—C) represented by the range:

$$0.4 \times 10^{-2}\ .\ H \leqslant d \leqslant 1.5 \times 10^{-2}\ .\ H$$

(H being the same as above) radially outwards of the position (A) located at the distance of $W_1$ on the imaginary curved surface extrapolated and drawn from said central zone-shaping portions, said shoulder zone-shaping portions having a larger radius of curvature ($R_2$) than that ($R_1$) of said central zone-shaping portions.

## Patentansprüche

1. Gürtelreifen mit ungewöhnlicher Verschleißfestigkeit, der eine Lauffläche (5) besitzt, die aus sich beiderseits der Umfangsmittellinie (1) des Reifens erstreckkenden mittleren Zonen (7) (7) und sich an diese anschließenden, nach außen hin erstreckenden Schulter-Zonen (8) (8) besteht, wobei jede der Schulter-Zonen mittels eines verdickten Gummi-Teils (9) ausgebildet ist, dessen Dicke fortschreitend in Richtung auf die Schulter-Kanten hin zunimmt, dadurch gekennzeichnet, daß die mittleren Zonen (7) (7) innerhalb eines geraden Abstandes $W_2$, der durch die Formel

$$W_2 = W/2 - 0,365\ H$$

(in der W bzw. H die Breite bzw. die Höhe eines jeweiligen Reifenabschnitts außerhalb des Felgenflansches bezeichnen, wenn der Reifen auf den vorgeschriebenen Luftdruck aufgepumpt ist) angegeben wird, von der Umfangsmittellinie (1) beiderseits derselben liegen und nur die mittleren Zonen (7) (7) über den gesamten Umfang hinweg kontinuierlich durchgehende Profilrillen aufweisen und daß die Höhe (H) des Abschnitts an der Stelle der Breite (W) des Abschnitts nach dem Aufpumpen des Reifens gegenüber dem Zustand nach dem Formen nicht verändert wird.

2. Verfahren zur Herstellung eines Gürtelreifen mit ungewöhnlicher Verschleißfestigkeit nach Anspruch 1, dadurch gekennzeichnet, daß zur Vulkanisation und Formgebung des Reifens ein Formwerkzeug mit einem die Lauffläche formenden Teil der Innenwand verwendet wird, der aus einer gekrümmten Oberfläche der die mittleren Zonen formenden Teile (7 M), die sich jeweils in einer Entfernung gleich der bezeichneten Entfernung $W_2$ von der Mittellinie (1M) des Formwerkzeugs her erstrecken, und einer gekrümmten Oberfläche der die Schulter-Zonen formenden Teile (8 M), die sich jeweils anschließend an die die mittleren Zonen Formenden Teile (7 M) an der Trennlinie (B) erstrecken, besteht, wobei die die Schulter-Zonen formenden Teile eine solchermaßen gekrümmte Oberfläche aufweisen, daß die Stelle (C, die darauf in einem Abstand $W_1$, der durch die Formel

$$W_1 = W/2 - 0,2\ H$$

(in der W und H die gleiche Bedeutung haben wie in der Definition von $W_2$) bezeichnet wird, von der Mittellinie (1M) gelegen ist, sich in einem Abstand d (A—C), der durch den Bereich

$$0,4 \times 10^{-2}\ .\ H \leq d \leq 1,5 \times 10^{-2}\ .\ H$$

(hierin hat H die oben angegebene Bedeutung) beziechnet wird, in radialer Richtung nach außen hin entfernt von der Stelle (A) befindet, die im Abstand $W_1$ auf der imaginären ge-

**0 016 229**

krümmten Oberfläche liegt, die durch extrapolierendes Weiterführen der Fläche der die mittleren Zonen formenden Teile gebildet wird, so daß die die Schulter-Zonen formenden Teile einen Krümmungsradius ($R_2$) besitzen, der größer ist als derjenige ($R_1$) der die Schulter-Zonen formenden Teile.

**Revendications**

1. Pneumatique à carcasse radiale résistant à l'usure irrégulière, qui comprend une bande de roulement (5) se composant d'une zone centrale (7) s'étendant sur les deux côtés de la ligne circonférentielle médiane (1) du pneumatique et de zones d'épaulement (8, 8) s'étendant latéralement et adjacentes auxdites zones centrales, lesdites zones d'épaulement étant chacune formées d'une partie caout-choutée surépaissie (9) augmentant progressivement d'épaisseur en direction du bord d'épaulement, caractérisé en ce que lesdites zones centrales (7, 7) s'étendent de chaque côté de la ligne circonférentielle médiane (1) jusqu'à une distance linéaire $W_2$ de cette ligne définie, par la formule

$$W_2 = W/2 - 0{,}365\ H$$

(où W et H désignent respectivement une largeur de section et une hauteur de section vers l'extérieur du rebord de jante du pneumatique lorsqu'il est gonflé à une pression d'air prescrite) et seulement les zones centrales (7, 7) sont pourvues de rainures continues circonférentielles et en ce que la hauteur de section H à l'endroit de la largeur de section W n'est pas changée depuis le moulage jusqu'au gonflage.

2. Procédé de fabrication d'un pneumatique à carcasse radiale ayant une résistance à l'usure irrégulière selon la revendication 1, caractérisé en ce qu'on utilise, pour la vulcanisation et le profilage du pneumatique, une partie de profilage de bande de roulement ayant une paroi intérieure qui se compose d'une surface incurvée de parties de profilage de zone centrale (7M) s'étendant chacune à partir de la ligne centrale (1 M) dudit moule sur une distance égale à la distance $W_2$ et de la surface incurvée de parties de profilage de zone d'épaulement (8M) chacune adjacente auxdites parties de profilage de zone centrale (7M) le long d'une limite (B), lesdites parties de profilage de zone d'épaulement ayant une surface incurvée telle que son point (C) situé à une distance ($W_1$) de la ligne centrale (1 M) représentée par la formule

$$W_1 = W/2 - 0{,}2\ H$$

(W et H étant les mêmes que pour la définition de $W_2$) est écarté radialement vers l'extérieur d'une distance $d$ (A—C) par rapport à un point (A) situé à la distance $W_1$ sur la surface incurvée imaginaire extrapolée et tracée à partir desdites parties de profilage de zone centrale, la distance $d$ étant définie par la relation:

$$0{,}4 \times 10^{-2}\ H \leqslant d \leqslant 1{,}5 \times 10^{-2}\ H$$

(H ayant la même signification que ci-dessus) lesdites parties de profilage de zone d'épaulement ayant un plus grand rayon de courbure ($R_2$) que le rayon ($R_1$) desdites parties de pro-filage de zone centrale.

FIG. 1

FIG. 2

FIG. 3

FIG. 4

FIG. 5

FIG. 6

FIG. 7